# EUROPEAN PATENT APPLICATION

(11) **EP 2 492 645 A1**
(43) Date of publication of application: **29.08.2012**
(21) Application number: 12156736.6
(22) Date of filing: 23.02.2012
(51) Int. Cl.: G01D 5/20, G01P 3/44, G01P 1/02, G01P 3/488, H02K 3/52, H01R 13/62

(54) **Resolver, and resolver-bearing unit including the same**

(30) Priority: 25.02.2011 JP 2011039922
(71) Applicant: JTEKT Corporation, Osaka-shi Osaka 542-8502 (JP)
(72) Inventor: Takei, Tomoyuki, Osaka-shi,, Osaka 542-8502 (JP); Kitahata, Kouji, Osaka-shi,, Osaka 542-8502 (JP); Kumeno, Toshiki, Osaka-shi,, Osaka 542-8502 (JP)
(74) Representative: Winter, Brandl, Fürniss, Hübner, Röss, Kaiser, Polte - Partnerschaft

(57) **Abstract**

A resolver-bearing unit according to the invention includes a resolver sensor that detects the rotational position of a shaft. The resolver sensor includes an annular stator disposed around a rotor; and a case that is fitted to an outer periphery of the stator, and covers the rotor and the stator. The stator includes an annular stator core with a plurality of teeth formed on an inner periphery thereof; first and second insulators; and coils respectively wound around the teeth via the first and second insulators. The first insulator is provided with a connector. The connector connects a harness for outputting detected rotational position of the shaft to lead wires that extend from the coils, with the harness extending in an axial direction of the shaft.

## Description

### BACKGROUND OF THE INVENTION

### 1. Field of the Invention

The invention relates to a resolver that detects the rotation angle (rotational position) of a rotating shaft, and a resolver-bearing unit including the same.

### 2. Description of Related Art

In a conventional motor-generator used in, for example, a hybrid vehicle, a resolver sensor that is a non-contact sensor is often used as a rotation sensor for detecting the position of a rotor because the resolver sensor has high reliability and environment resistance.
The resolver sensor is assembled with a bearing for supporting a rotor shaft, and a resolver-bearing unit that is formed from the resolver sensor and the bearing is incorporated into the motor-generator.

The resolver sensor generally includes a rotor that is fixed to the rotating shaft, and a stator that is disposed around the rotor. The stator includes a stator core made of a magnetic material, and coils that are respectively wound around teeth formed on the stator core via insulators that are made of an insulating material. The insulators are a pair of members that sandwich the annular stator core from both sides in the axial direction. Therefore, the stator has a relatively complex structure. In addition, the stator is structured by laminating a plurality of annular members in the axial direction. Due to such a structure, a harness for extracting the outputs from the coils is often arranged in such a manner that the harness extends radially outward from the resolver sensor (e.g., see Japanese Patent Application Publication No. 2004-120873 (JP 2004-120873 A)).

Hybrid vehicles are no longer limited to large-size vehicles, and have become increasingly available as small-size vehicles in recent years. Motor-generators have also become more compact, which has produced an accompanying demand for more compact resolvers.

However, as explained above, conventional resolvers often have a harness arranged so as to extend radially outward from the resolver, and a space for installing the harness must be secured on the radial outer side of the resolver. As a consequence, it may not be possible to dispose the conventional resolver in a limited space and this could interfere with efforts to make the resolver-bearing unit formed from the resolver and the bearing, as well as the motor-generator, more compact.

### SUMMARY OF THE INVENTION

It is an object of the invention to provide a resolver that is more compact, and a resolver-bearing unit including the same.

An aspect of the invention relates to a resolver that detects a rotational position of a rotating shaft that includes a rotor, an annular stator, and a housing. The rotor is fixed to the rotating shaft so as to rotate together with the rotating shaft. The stator is disposed around the rotor. The housing is fitted to an outer periphery of the stator, and covers the rotor and the stator. The stator includes an annular stator core with teeth formed on an inner periphery of the stator core, an insulator that is formed in an annular shape, and covers surfaces of the teeth, and a plurality of coils respectively wound around the teeth via the insulator. The insulator is provided with a connector that connects a harness for outputting a detected rotational position of the rotating shaft to a plurality of lead wires respectively extending from the coils with the harness extending in an axial direction of the rotating shaft.

### BRIEF DESCRIPTION OF THE DRAWINGS

Features, advantages, and technical and industrial significance of example embodiments of the invention will be described below with reference to the accompanying drawings, in which like numerals denote like elements, and wherein:
FIG. 1 is a sectional view of a resolver-bearing unit according to an example embodiment of the invention;
FIG. 2 is a view of a resolver sensor according to the example embodiment of the invention as seen from the direction of an arrow in FIG. 1;
FIG. 3 is a perspective view of a stator according to the example embodiment of the invention; and
FIG. 4 is a partial sectional view taken along a line IV-IV in FIG. 2.

### DETAILED DESCRIPTION OF EMBODIMENTS

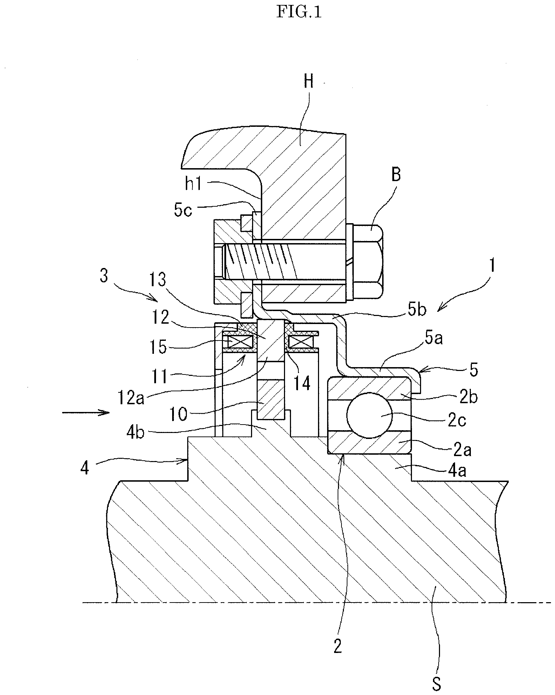

An example embodiment of the invention will be described with reference to the accompanying drawings. FIG. 1 is a sectional view of a resolver-bearing unit 1 according to the example embodiment of the invention. The resolver-bearing unit 1 is used to support a shaft S of a motor-generator mounted in, for example, a hybrid vehicle, and also used to detect the rotational position (rotation angle) of the shaft S.

As shown in FIG. 1, the resolver-bearing unit 1 is fixed to a motor housing H of the motor generator. The resolver-bearing unit 1 supports the shaft S, which is a rotating shaft, such that the shaft S is rotatable relative to the motor housing H.

The resolver-bearing unit 1 includes a bearing 2, a resolver sensor 3, and an annular case 5 (housing).

An outer periphery of the protrusion 4 is formed with a columnar portion 4a, and a rib 4b. The bearing 2 is fitted and fixed to an outer periphery of the columnar portion 4a. A rotor 10 of the resolver sensor 3 is fixed to the rib 4b so as to rotate together with the shaft S.
The case 5 has a first cylinder portion 5a, a second cylinder portion 5b, and an attachment flange 5c. The first cylinder portion 5a is fitted to an outer periphery of the bearing 2. A stator 11 of the resolver sensor 3 is fixed to an inner periphery of the second cylinder portion 5b. The attachment flange 5c is formed on an end portion of the second cylinder portion 5b.

The case 5 is fixed to the motor housing H by a bolt B with the attachment flange 5c in contact with an axially inner surface hl of the motor housing H. The resolver-bearing unit 1 is thus fixed to the motor housing H. In addition, the case 5 is disposed on the inner side of the motor housing H so as to cover the resolver sensor 3 and the bearing 2.

The protrusion 4 and the case 5 are each fixed to members of the bearing 2 and the resolver sensor 3, whereby the bearing 2 and the resolver sensor 3 are fixed to each other via the case 5.

The bearing 2 includes an inner ring 2a, an outer ring 2b that is disposed radially outward of the inner ring 2a so as to be concentric with the inner ring 2a, and a plurality of balls 2c rollably disposed between the inner ring 2a and the outer ring 2b. The inner ring 2a of the bearing 2 is fixed to the columnar portion 4a of the protrusion 4 of the shaft S so as to rotate together with the shaft S. The outer ring 2b of the bearing 2 is fixed to the motor housing H via the first cylinder portion 5a of the case 5. Thus, the bearing 2 supports the shaft S such that the shaft S is rotatable relative to the motor housing H.

The resolver sensor 3 includes the rotor 10, and the annular stator 11. The rotor 10 is fixed to the protrusion 4 of the shaft S so as to rotate together with the shaft S. The stator 11 is fixed to an inner periphery of the case 5 and thus disposed around the rotor 10.

Note that, in the example embodiment, the protrusion 4 is integrally formed with the shaft S. However, in place of the protrusion 4, a sleeve separate from the shaft S may be fitted to an outer periphery of the shaft S.

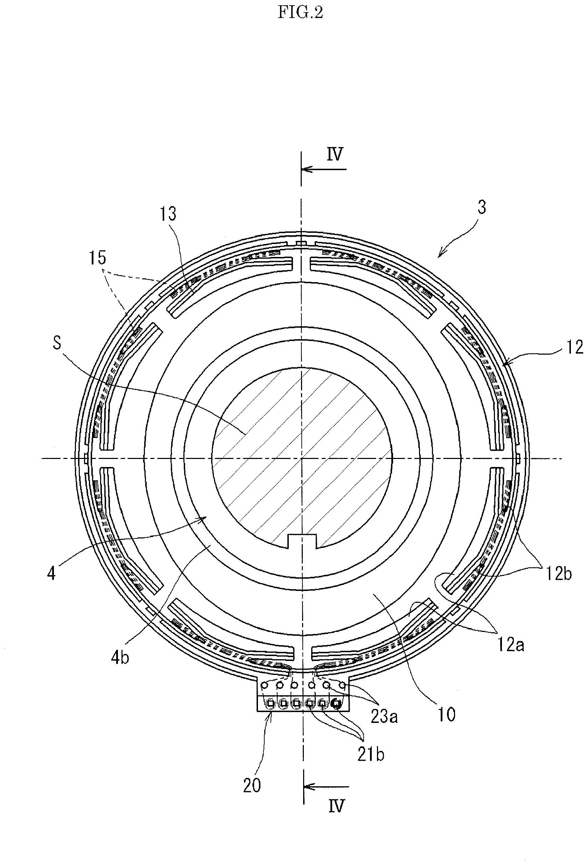

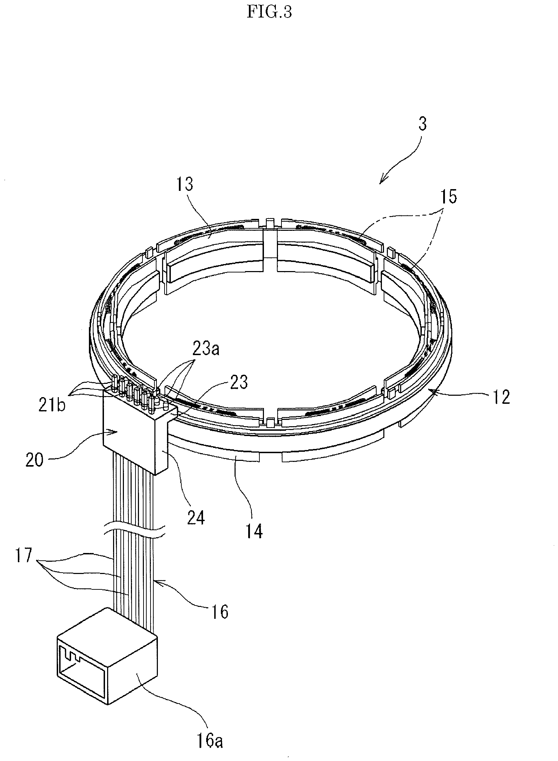

FIG. 2 is a view of the resolver sensor 3 as seen from the direction of an arrow in FIG 1. FIG. 3 is a perspective view of the stator 11. Note that the case 5 is not shown in FIGS. 2 and 3.
Referring to FIGS. 1 to 3, the stator 11 includes a stator core 12, a first insulator 13, a second insulator 14, and coils 15. A plurality of teeth 12a is formed on an inner periphery of the stator core 12. The first and second insulators 13, 14 are disposed so as to sandwich the stator core 12 from respective sides in the axial direction. The coils 15 are respectively wound around the teeth 12a.

The stator core 12 is an annular member that is formed by laminating a plurality of steel sheets, for example. The teeth 12a formed on the stator core 12 project radially inward.
The teeth 12a each has a narrowed portion 12b that narrows from both sides in the circumferential direction.
The coils 15 are formed by winding wires around the narrowed portions 12b of the teeth 12a.

The teeth 12a and the coils 15 are insulated from each other by the first and second insulators 13, 14.

The first and second insulators 13, 14 are both annular members made of an insulating resin. The first and second insulators 13, 14 are disposed so as to sandwich the stator core 12 from respective sides in the axial direction. The first and second insulators 13, 14 are shaped to cover at least the narrowed portions 12b of the teeth 12a so that the stator core 12 is insulated from the wires that constitute the coils 15. In addition, combining the first and second insulators 13, 14 together forms a shape that guides the wires that constitute the coils 15.

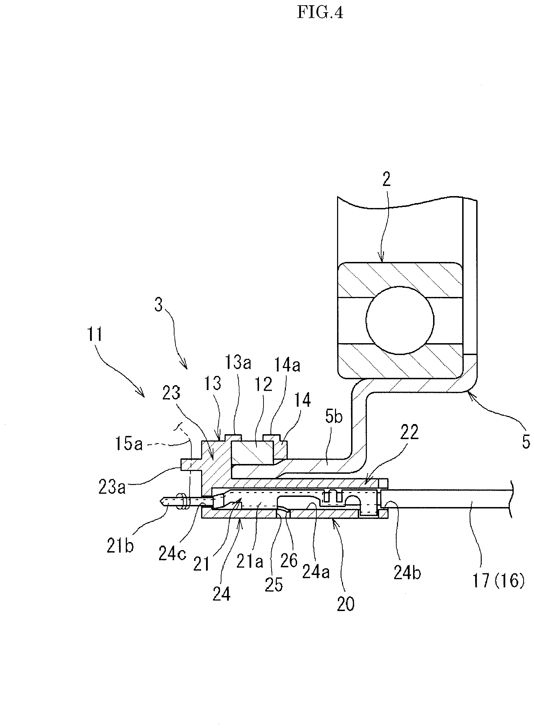

The first and second insulators 13, 14 have inner peripheries that are respectively formed with projections 13a, 14a (FIG. 4) that axially project on the stator core 12 side. The projections 13a, 14a (fixing portions) are formed along the circumferential direction at sections of the insulators 13, 14 other than sections corresponding to the teeth 12a. The projections 13a, 14a (fixing portions) position the first and second insulators 13, 14 with respect to the stator core 12 by being fitted to the inner periphery of the stator core 12.

The rotor 10 is an annular member made of, for example, a steel plate. As described above, the rotor 10 is fixed to the rib 4b so as to rotate together with the shaft S, and disposed radially inward of the stator 11.
An outer periphery 10a of the rotor 10 is formed into a substantially elliptical shape as viewed from the axial direction of the shaft S. When the shaft S rotates, the rotor 10 rotates together with the shaft S, thus changing an air gap between the stator 11 and the outer periphery 10a of the rotor 10. The resolver sensor 3 detects the rotational position of the shaft S based on such changes in the air gap.

The first insulator 13 is placed on a surface of the stator core 12, which faces in the axially inward direction of the motor housing H. The first insulator 13 is provided with a connector 20 that connects a harness 16 used to output the detected rotational position of the shaft S with lead wires extending from the coils 15.
The harness 16 includes a plurality of wires 17 (six in FIG 3). A first end of the harness 16 is connected to the connector 20. A socket 16a that connects the harness 16 to an instrument or the like that receives the output from the resolver sensor 3 is provided at a second end of the harness 16.

FIG. 4 is a partial sectional view taken along a line IV-IV in FIG. 2.
Referring to FIGS. 2 to 4, the connector 20 includes terminals 21 and a terminal housing 22. The terminals 21 are respectively connected to first ends of the wires 17. The terminal housing 22 is integrally formed with an outer periphery of the first insulator 13.

Each terminal 21 is a rod-like member provided so as to extend from the first end of a corresponding one of the wires 17 (the harness 16). The terminals 21 each has a main body 21 a that is pressure-connected to the wire 17 by crimping, and a terminal portion 21 b that is provided on a first end side of the main body 21 a and projects from the terminal housing 22.

The terminal housing 22 has a protruding portion 23, and a housing main body 24. The protruding portion 23 is provided so as to radially protrude from the first insulator 13. The housing main body 24 is formed so as to axially extend from a radially outer end portion of the protruding portion 23 in the axially outward direction of the motor housing H, while contacting an outer periphery of the second cylinder portion 5b. The terminal housing 22 is formed such that the stator core 12 and the second cylinder portion 5b of the case 5 are held between the housing main body 24 and the projection 13a.

A plurality of holding holes 24a is formed in the housing main body 24, and the terminals 21 provided on the wires 17 are respectively accommodated and held in the holding holes 24a.

In the housing main body 24, the holding holes 24a are formed so as to be aligned in the direction of a tangent to the outer periphery of the second cylinder portion 5b and to be generally parallel to each other. Each holding hole 24a is formed within the housing main body 24 so as to extend in the axial direction from a first opening 24b that opens at an end surface of the housing main body 24, the end surface facing in the axially outward direction of the motor housing H.

The terminals 21 are inserted in the respective holding holes 24a from the first openings 24b.

In addition, a bottom portion of each holding hole 24a has a second opening 24c that passes through the bottom portion to communicate with an internal space within the motor housing H. A terminal portion 21b of the corresponding terminal 21 accommodated inside the holding hole 24a passes through the second opening 24c. The terminal portions 21b are exposed on the outside of the terminal housing 22. Also, each second opening 24c has an inner diameter small enough to prevent the main body 21 a to pass through the second opening 24c. Thus, the terminal housing 22 holds the main bodies 21a of the terminals 21 inside the holding holes 24a with only the terminal portions 2 1 b exposed on the outside of the terminal housing 22.

Through holes 25 that are in communication with the respective holding holes 24a are formed in a radially outer surface of the terminal housing 22. Projections 26 that are provided at the main bodies 21a of the terminals 21 are respectively engaged with the through holes 25.

The projections 26 are each formed into a rectangular plate shape, and extends from the terminal portion 21b-side toward the wire 17. Each projection 26 has a base end portion on the terminal portion 21b-side, and an end portion on the wire 17-side. The end portion on the wire 17-side is bent slightly outward with respect to the base end portion. As a result, the projection 26 projects from an outer surface of the main body21a.
When each terminal 21 is inserted into the holding hole 24a from the first opening 24b, the projection 26 is elastically retracted by the inner periphery of the housing main body 24, which defines the holding hole 24a, to be flush with the outer surface of the main body 21 a. Upon reaching the axially inner end of the through hole 25, each proj ection 26 projects from the outer surface of the main body 21 a and engages with the through hole 25. This prevents the terminals 21 from coming out of the holding holes 24a.
Note that the dimensions of the main bodies 21 a, the projections 26, and the through holes 25 are set such that the main bodies 21a are respectively held inside the holding holes 24a with the terminal portions 21b of the terminals 21 exposed on the outside of the terminal housing 22.

In this manner, each terminal 21 is fitted in the corresponding holding hole 24a formed in the terminal housing 22 so as to extend in the axial direction of the shaft S. The terminals 21 each has the projection 26 (engaging projection) that engages with the corresponding through hole 25 of the terminal housing 22 when the terminal 21 is inserted into the holding hole 24a to prevent the terminal 21 from coming out of the holding hole 24a. Because the projections 26 are engaged with the through holes 25 when the terminals 21 are inserted into the holding holes 24a, the terminals 21 are securely held in the terminal housing 22. Accordingly, the connector 20 is easily configured by inserting the terminals 21 into the holding holes 24a of the terminal housing 22. In addition, due to the projections 26, the terminals 21 are reliably held in the holding holes 24a of the terminal housing 22.
Moreover, by forming each holding hole 24a into a shape that allows insertion of a general-purpose terminal, the connector 20 is constituted without requiring special terminals, and a cost reduction is also achieved as a result.

The protruding portion 23 has projections 23a for allocating lead wires 15a extending from the coils 15 to the respective terminal portions 21b. The projections 23a are provided corresponding to the terminal portions 21b of the terminals 21. The lead wires 15a from the coils 15 are respectively bound around and connected to the terminal portions 21b, and the projections 23a are used to sort the lead wires 15a before the lead wires 15a are bound around the terminal portions 21b.
The lead wires 15a bound around the terminal portions 21b are connected to the terminal portions 21b by soldering, for example.

As described above, in the connector 20 according to the example embodiment, the terminals 21 that extend from the first end of the harness 16 are respectively inserted and held in the holding holes 24a formed in the terminal housing 22 in the axial direction of the shaft S. The connector 20 thus connects the harness 16 to the lead wires 15a with the harness 16 extending in the axial direction of the shaft S.

The thus configured resolver-bearing unit 1 according to the example embodiment includes the resolver sensor 3 that detects the rotational position of the shaft S. The resolver sensor 3 includes the rotor 10, the annular stator 11, and the case 5 (housing). The rotor 10 is fixed to the shaft S so as to rotate together with the shaft S. The stator 11 is disposed around the rotor 10. The case 5 is fitted to an outer periphery of the stator 11, and covers the rotor 10 and the stator 11. The stator 11 includes the annular stator core 12, the first and second insulators 13, 14, and the coils 15. The teeth 12a are formed on the inner periphery of the stator core 12. The first and second insulators 13, 14 are formed in an annular shape and cover the surfaces of the teeth 12a. The coils 15 are respectively wound around the teeth 12 via the first and second insulators 13, 14. The first insulator 13 is provided with the connector 20 that connects the harness 16, through which the detected rotational position of the shaft S is output, to the lead wires 15a extending from the coils 15, with the harness 16 extending in the axial direction.

With the resolver sensor 3 and the resolver-bearing unit 1 configured as described above, the connector 20 connects the harness 16 to the lead wires 15a of the coils 15 with the harness 16 extending in the axial direction of the shaft S. There is thus no need to secure a space for installing the harness 16 on the radial outer side of the resolver sensor portion 3. Consequently, the resolver sensor 3 is disposed in a limited space, and a more compact configuration achieved as a result.

In the example embodiment, the connector 20 includes the rod-like terminals 21, and the terminal housing 22. The terminals 21 extend from the first end of the harness 16, and are connected to the lead wires 15a. The terminal housing 22 is integrally formed with the outer periphery of the first insulator 13, and holds the terminals 21 such that the terminals 21 are parallel to the axial direction of the shaft S.
As a consequence, because the terminal housing 22 holds the terminals 21 extending from the first end of the harness 16 such that the terminals 21 are parallel to the axial direction of the shaft S, the harness 16 is more reliably connected to the lead wires 15a while disposed so as to extend in the axial direction of the shaft S.

The stator 11 of the resolver-bearing unit 1 according to the example embodiment is assembled as follows. First, the second insulator 14 is disposed on one axial end surface of the stator core 12, and then the stator core 12 is fitted and fixed to the inner peripheral surface side of the case 5. Next, the first insulator 13 is disposed on the other axial end surface of the stator core 12, and the coils 15 are respectively wound around the teeth 12a.

Here, as described above, the terminal housing 22 is formed such that the stator core 12 and the case 5 (housing) are held between the terminal housing 22 and the projection 13a (fixing portion) that is formed on the first insulator 13 and fitted to the inner periphery of the stator core 12. Thus, when disposing the first insulator 13 to assemble the stator 11 of the resolver-bearing unit 1, it is possible to dispose the first insulator 13 while holding the stator core 12 and the second cylinder portion 5b of the case 5 between the terminal housing 22 and the projection 13a. Disposing the first insulator 13 makes it possible to more reliably fix the first and second insulators 13, 14, the stator core 12, and the case 5 to each other. Consequently, subsequent assembly processes of, for example, winding the coils 15 is easily performed.

The invention is not limited to the example embodiment described above. In the example embodiment described above, the resolver-bearing unit according to the invention is applied to a motor-generator. However, the resolver-bearing unit according to the invention may also be applied to other devices that include a rotating shaft, such as an ordinary industrial motor.

## Claims

1. A resolver that detects a rotational position of a rotating shaft, comprising:
a rotor that is fixed to the rotating shaft so as to rotate together with the rotating shaft;
an annular stator that is disposed around the rotor; and
a housing that is fitted to an outer periphery of the stator, and covers the rotor and the stator,
wherein the stator includes an annular stator core with teeth formed on an inner periphery of the stator core, an insulator that is formed in an annular shape, and covers surfaces of the teeth, and a plurality of coils respectively wound around the teeth via the insulator, and
wherein the insulator is provided with a connector that connects a harness for outputting a detected rotational position of the rotating shaft to a plurality of lead wires respectively extending from the coils with the harness extending in an axial direction of the rotating shaft.

2. The resolver according to claim 1, wherein the connector includes a plurality of rod-like terminals that extend from an end of the harness and respectively connected to the lead wires, and a terminal housing that is integrally formed with an outer periphery of the insulator and holds the terminals such that the terminals are parallel to the axial direction.

3. The resolver according to claim 2, wherein the stator core and the housing are held between the terminal housing and a fixing portion that is formed on the insulator and fitted to the inner periphery of the stator core.

4. The resolver according to claim 2 or 3,
wherein the terminal housing has a plurality of holding holes which extend in the axial direction, in which the respective terminals are inserted, and which respectively hold the inserted terminals such that the terminals are parallel to the axial direction, and
wherein the terminals each include an engaging projection that engages with the terminal housing when the terminal is inserted and held in the holding hole.

5. A resolver-bearing unit comprising:
a bearing that includes an inner ring that is fixed to a rotating shaft so as to rotate together with the rotating shaft, and an outer ring that is disposed radially outward of the inner ring so as to be concentric with the inner ring;
a resolver that detects a rotational position of the rotating shaft; and
a housing that is fixed to an outer periphery of the outer ring, and via which the resolver and the bearing are fixed to each other,
wherein the resolver includes a rotor that is fixed to the rotating shaft so as to rotate together with the rotating shaft, and an annular stator that is fixed to an inner periphery of the housing, and disposed around the rotor,
wherein the stator includes an annular stator core with teeth formed on an inner periphery of the stator core, an insulator that is formed in an annular shape, and covers surfaces of the teeth, and a plurality of coils respectively wound around the teeth via the insulator,
wherein the insulator is provided with a connector that connects a harness for outputting a detected rotational position of the rotating shaft to a plurality of lead wires respectively extending from the coils with the harness extending in an axial direction of the rotating shaft.
